# EUROPÄISCHE PATENTSCHRIFT

(11) **EP 1 537 000 B1**
(45) Veröffentlichungstag und Bekanntmachung des Hinweises auf die Patenterteilung: **14.11.2007**
(21) Anmeldenummer: 03727211.9
(22) Anmeldetag: 24.04.2003
(51) Int. Cl.: B62B 5/02, B62B 3/14

(54) **ROLLTREPPENGÄNGIGER GEPÄCKTRANSPORTWAGEN**
BAGGAGE TROLLEY THAT CAN BE USED ON ESCALATORS
CHARIOT A BAGAGES POUVANT ETRE UTILISE SUR UN ESCALIER ROULANT

(30) Priorität: 13.09.2002 DE 10242631
(43) Veröffentlichungstag der Anmeldung: 08.06.2005
(73) Patentinhaber: WANZL METALLWARENFABRIK GMBH, D-89336 Leipheim (DE)
(72) Erfinder: BOXLER, Anton, 87772 Pfaffenhausen (DE)
(86) Internationale Anmeldenummer: PCT/DE2003/001327
(87) Internationale Veröffentlichungsnummer: WO 2004/026662

(56) Entgegenhaltungen:
- WO-A-01/94182
- CH-A- 630 856
- DE-A- 10 039 715
- DE-U- 7 242 079
- DE-U- 20 216 458
- PATENT ABSTRACTS OF JAPAN vol. 2000, no. 09, 13. Oktober 2000 (2000-10-13) & JP 2000 177595 A (HANAOKA SHARYO KK), 27. Juni 2000 (2000-06-27)

## Beschreibung

Die Erfindung betrifft einen rolltreppengängigen, mit gleichen Wagen stapelbaren Gepäcktransportwagen, mit zwei hinteren Rädern und mit einer vorderendig angeordneten Lenkrolle, mit Mitteln zum Abstützen auf einer Rolltreppe, mit einem Fahrrahmen, mit einer Ladeplattform und mit aufrecht angeordneten Holmen, die an ihrem unteren Ende jeweils eine Radgabel zur Aufnahme der hinteren Räder aufweisen und gemeinsam mit ihrem oberen Ende eine Schiebeeinrichtung tragen, die geeignet ist, eine auf die hinteren Räder wirkende Bremseinrichtung zu beeinflussen, wobei die Bremseinrichtung eine quer verlaufende Auslösestange aufweist und wobei der Fahrrahmen, die Ladeplattform und die Holme über Schweißverbindungen miteinander verbunden sind und die Ladeplattform sich zusätzlich auf dem Fahrrahmen abstützt.

Zum nächstliegenden Stand der Technik zählen rolltreppengängige Gepäcktransportwagen, die zum Anmeldezeitpunkt dieser Erfindung zumindest am Flughafen Frankfurt/Main in Deutschland im Einsatz waren oder noch sind. Diese Gepäcktransportwagen weisen Mittel auf, die zum Abstützen der Gepäcktransportwagen dann wirksam werden, wenn diese sich auf einer fahrenden Rolltreppe befinden. Ein derartiger Einsatz erfordert von den Gepäcktransportwagen eine ausreichende Verwindungsversteifigkeit ebenso, wie einen niedrig liegenden Gesamtschwerpunkt, damit der Transport solcher, mit Gepäck beladener Wagen auf einer fahrenden Rolltreppe problemlos bewältigt werden kann. Der Fahrrahmen dieser Gepäcktransportwagen weist einen Unterrahmen und einen Oberrahmen auf, wobei der Unterrahmen mit seinen hinteren Enden mit den nach oben gerichteten Holmen verschweißt ist. Der Oberrahmen ist in seinem vorderen Bereich mit einem die Längsholme des Unterrahmens verbindenden Querstab sowie mit seinen beiden hinteren Enden mit einem die Längsholme des Unterrahmens verbindenden Querstab verschweißt, der wiederum, ebenfalls durch Schweißung, mit den Längsholmen des Unterrahmens verbunden ist. Die Ladeplattform ist mit dem Unterrahmen und mit dem Oberrahmen verschweißt und mit seinen nach oben gerichteten hinteren Enden ortsfest mit den Holmen verbunden. Je eine Versteifungsrippe ist dazu vorgesehen, die Anbindung von Fahrrahmen und Ladeplattform an die Holme zu verbessern. Diese an sich stabile Konstruktion fällt in nachteiliger Weise durch die Vielzahl ihrer Schweißverbindungen und durch eine beachtliche Teilevielfalt auf. Auch ist im Laufe der Zeit festgestellt worden, dass sich bei der geschilderten Konstruktion Risse und Bruchstellen deshalb einstellen, weil durch die enorme Verwindungssteifigkeit der gewählten Rahmenkonstruktion die für den Betrieb auf fahrenden Rolltreppen erforderliche Elastizität nicht mehr gegeben ist.

DE 100 39 715 A wird als nächstliegender Stand der Technik angesehen.

Es ist Aufgabe der Erfindung, einen Gepäcktransportwagen der hier vorgesehen Art so weiterzuentwickeln, dass im Bereich des Fahrrahmens und der Ladeplattform die Vielzahl der Schweißstellen reduziert, die Teilevielfalt verringert und gleichzeitig die Elastizität der aufzufindenden Rahmenkonstruktion verbessert werden kann, ohne dass sich der Gesamtschwerpunkt des Gepäcktransportwagens nach oben verschiebt.

Die Lösung der Aufgabe besteht darin, dass sich der Fahrrahmen und die Ladeplattform kreuzen, dass die Ladeplattform mit den Radgabeln und der Fahrrahmen mit einem in die Radgabeln mündenden Querstab verbunden sind und dass die Verbindungsstellen von Ladeplattform und Radgabeln tiefer angeordnet sind als die Verbindungsstellen von Fahrrahmen und Querstab.

Die vorgeschlagene Lösung bewirkt folgende Vorteile:
- Die Anzahl der Schweißstellen im Bereich des Fahrrahmens und der Ladeplattform reduziert sich von 22 auf 12 Schweißstellen.
- Der Oberrahmen sowie die beiden Versteifungsrippen entfallen. Dadurch verringert sich die Teilevielfalt.
- Durch die Reduzierung der Schweißstellen und der Teileanzahl erhöht sich die Elastizität der so gewählten Rahmenkonstruktion. Verwindungskräfte wirken sich nicht nachteilig auf die Schweißstellen aus.
- Durch das Anbinden der Ladeplattform an die Radgabeln und durch die dabei bewirkte kreuzweise Anordnung von Fahrrahmen und Ladeplattform nimmt diese eine extrem niedrige Lage am Gepäcktransportwagen ein. Dadurch wird ein Verlagern des Gesamtschwerpunktes nach oben vermieden.

Die Erfindung wird anhand eines Ausführungsbeispieles näher erläutert. Es zeigt
- Fig. 1: einen Gepäckwagen in räumlicher Darstellung sowie
- Fig. 2: den gleichen Wagen in Seitenansicht und längsgeschnitten.

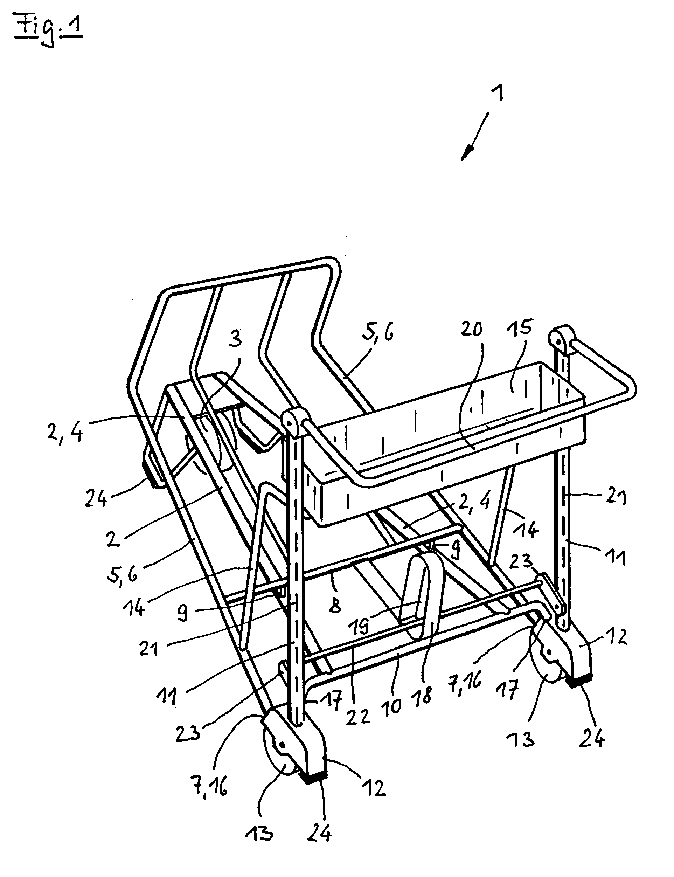

Der in Fig. 1 dargestellte rolltreppengängige, mit gleichen Wagen stapelbare Gepäcktransportwagen 1 weist zwei hintere Räder 13 und vorderendig eine Lenkrolle 3 auf. Nahe der Lenkrolle 3 und nahe der hinteren Räder 13 befinden sich als Stützteile ausgebildete Mittel 24, die ein sicheres Abstützen des Gepäcktransporwagens 1 auf einer sich bewegenden Rolltreppe garantieren. Der Gepäcktransportwagen 1 weist einen Fahrrahmen 2, eine nach vorne ansteigende Ladeplattform 5 für Gepäck sowie rückseitig befindliche, aufrechte Holme 11 auf, die an ihrem unteren Ende eine Radgabel 12 zur Aufnahme eines hinteren Rades 13 und mit ihrem oberen Ende eine Schiebeeinrichtung 20 tragen. Von der Schiebeeinrichtung 20 aus führt eine Bremseinrichtung 21 nach unten zu den hinteren Rädern 13, wobei die Bremseinrichtung 21 in bekannter Weise durch die Schiebeeinrichtung 20 beeinflussbar ist. Die Bremseinrichtung 21 weist eine quer verlaufende, verschwenkbare Auslösestange 22 auf, die ein Lösen der Bremseinrichtung 21 des jeweils vorausbefindlichen Gepäcktransportwagens 1 dann bewirkt, wenn mehrere Gepäcktransportwagen 1 in einer Reihe gestapelt, also abgestellt sind. Der Fahrrahmen 2 trägt in seinem vorderen Abschnitt die Lenkrolle 3. Die Ladeplattform 5 weist zwei Längsträger 6 auf, die mit ihrem hinteren Ende 7 mit je einer Radgabel 12 verschweißt sind. Von den beiden Längsträgern 6 führen Stützstreben 14 nach oben, die an die beiden Holme 11 angeschweißt sind und wahlweise einen Korb 15 zur Aufnahme von Kleingepäck tragen. Oberhalb der Verbindungsstellen 16 der Längsträger 6 und der Radgabeln 12 ist ein Querstab 10 vorgesehen, der mit den beiden Radgabeln 12 verschweißt ist. Die Verbindungsstellen 17 des Querstabes 10 und der Radgabeln 12 sind höher angeordnet als die Verbindungsstellen 16 der Längsträger 6 und der Radgabeln 12. Am Querstab 10 sind zwei Längsträger 4 angeschweißt, die dem Fahrrahmen 2 angehören. Der Fahrrahmen 2 fällt nach vorne leicht ab. Nahe der Stützstreben 14 ist die Ladeplattform 5 mit einer Querstrebe 8 ausgestattet. Von der Querstrebe 8 führen zwei kleine Stützteile 9 zu den Längsträgern 4 des Fahrrahmens 2 wobei die Längsträger 4 über die Stützteile 9 mit der Querstrebe 8 der Ladeplattform 5 verschweißt sind. Von der Querstrebe 8 führt eine Anschlageinrichtung 18 nach hinten. Die Anschlageinrichtung 18 ist zwischen den Holmen 11 angeordnet und mit dem Querstab 10 zusätzlich verschweißt. Die Anschlageinrichtung 18 weist einen geschlossenen Abschnitt 19 auf, durch den die Auslösestange 22 hindurchgeführt und mit ihren Enden mit je einem Schwenkhebel 23 verbunden ist, der zur Bremseinrichtung 21 gehört.

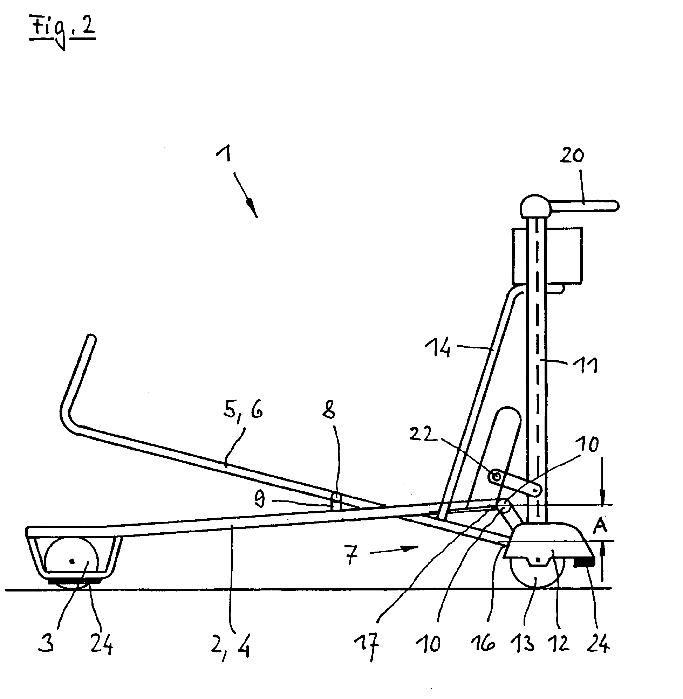

In der Zeichnung gemäß Fig. 2 ist ersichtlich, dass sich der nach unten geneigte Fahrrahmen 2 und die nach oben ansteigende Ladeplattform 5 kreuzen. Man erkennt, dass die Ladeplattform 5 mit den Radgabeln 12 und der Fahrrahmen 2 mit dem in die Radgabeln 12 mündenden Querstab 10 verbunden sind. Man sieht anhand des Maßes A, dass die Verbindungsstellen 16 von Ladeplattform 5 und Radgabeln 12 tiefer angeordnet sind als die Verbindungsstellen 17 von Fahrrahmen 2 und Querstab 10.

Alle weiteren technischen Details, die hier nicht beschrieben sind, lassen sich dem eingangs genannten Stand der Technik entnehmen.

## Patentansprüche

1. Rolltreppengängiger, mit gleichen Wagen stapelbarer Gepäcktransportwagen (1), mit zwei hinteren Rädern (13) und mit einer vorderendig angeordneten Lenkrolle (3), mit Mitteln (24) zum Abstützen auf einer Rolltreppe, mit einem Fahrrahmen (2), mit einer Ladeplattform (5) und mit aufrecht angeordneten Holmen (11), die an ihrem unteren Ende jeweils eine Radgabel (12) zur Aufnahme der hinteren Räder (13) aufweisen und gemeinsam mit ihrem oberen Ende eine Schiebeeinrichtung (20) tragen, die geeignet ist, eine auf die hinteren Räder (13) wirkende Bremseinrichtung (21) zu beeinflussen, wobei die Bremseinrichtung (21) eine quer verlaufende Auslösestange (22) aufweist und wobei der Fahrrahmen (2), die Ladeplattform (5) und die Holme (11) über Schweißverbindungen miteinander verbunden sind und die Ladeplattform (5) sich zusätzlich auf dem Fahrrahmen (2) abstützt, **dadurch gekennzeichnet, dass** sich der Fahrrahmen (2) und die Ladeplattform (5) kreuzen, dass die Ladeplattform (5) mit den Radgabeln (12) und der Fahrrahmen (2) mit einem in die Radgabeln (12) mündenden Querstab (10) verbunden sind und dass die Verbindungsstellen (16) von Ladeplattform (5) und Radgabeln (12) tiefer angeordnet sind als die Verbindungsstellen (17) von Fahrrahmen (2) und Querstab (10).

2. Gepäcktransportwagen nach Anspruch 1, **dadurch gekennzeichnet, dass** der Fahrrahmen (2) eine nach vorne geneigte Lage einnimmt.

3. Gepäcktransportwagen nach Anspruch 1 oder 2, **dadurch gekennzeichnet, dass** die Auslösestange (22) durch eine Anschlageinrichrung (18) hindurchgeführt ist, die sich zwischen den Holmen (11) befindet.

## Claims

1. A luggage trolley (1) which is usable on escalators and nestable with like trolleys, comprising two rear wheels (13) and a steering caster (3) arranged at the front end, means (24) for supporting the trolley on an escalator, a wheel frame (2), a loading platform (5) and uprights (11), the lower ends of which are each provided with a wheel fork (12) for mounting the rear wheels (13) and the upper ends of which together carry a pushing arrangement (20) suitable for controlling a brake device (21) acting on the rear wheels (13), wherein the brake device (21) comprises a transversely extending release rod (22) and wherein the wheel frame (2), the loading platform (5) and the uprights (11) are connected to one another by weld joints, and the loading platform (5) is additionally supported on the wheel frame (2), **characterised in that** the wheel frame (2) and the loading platform (5) intersect one another, **in that** the loading platform (5) is connected to the wheel forks (12) and the wheel frame (2) is connected to a crossbar (10) leading into the wheel forks (12), and **in that** the connection points (16) between the loading platform (5) and the wheel forks (12) are arranged lower than the connection points (17) between the wheel frame (2) and the crossbar (10).

2. A luggage trolley according to claim 1, **characterised in that** the wheel frame (2) adopts a position sloping down towards the front.

3. A luggage trolley according to claim 1 or 2, **characterised in that** the release rod (22) extends through a stop device (18) arranged between the uprights (11).

## Revendications

1. Chariot à bagages (1) pouvant être utilisé sur un escalier roulant et pouvant être empilé avec des chariots identiques, avec deux roues arrière (13) et avec une roulette de guidage (3) disposée à l'extrémité avant, avec des moyens (24) pour s'appuyer sur un escalier roulant, avec un châssis (2), avec une plate-forme de chargement (5) et avec des montants (11) disposés verticalement, qui présentent chacun à leur extrémité inférieure une fourche de roue (12) pour recevoir les roues arrière (13) et qui portent conjointement par leur extrémité supérieure un dispositif de poussée (20) qui permet d'agir sur un dispositif de freinage (21) agissant sur les roues arrière (13), sachant que le dispositif de freinage (21) présente une tringle d'activation (22) s'étendant transversalement et sachant que le châssis (2), la plate-forme de chargement (5) et les montants (11) sont mutuellement reliés par des liaisons soudées et que la plate-forme de chargement (5) s'appuie en outre sur le châssis (2), **caractérisé en ce que** le châssis (2) et la plate-forme de chargement (5) se croisent, **en ce que** la plate-forme de chargement (5) est reliée aux fourches de roues (12) et le châssis (2) à une barre transversale (10) se terminant dans les fourches de roues (12), et **en ce que** les points de jonction (16) entre la plate-forme de chargement (5) et les fourches de roues (12) sont disposés plus bas que les points de jonction (17) entre le châssis (2) et la barre transversale (10).

2. Chariot à bagages selon la revendication 1, **caractérisé en ce que** le châssis (2) prend une position inclinée vers l'avant.

3. Chariot à bagages selon la revendication 1 ou 2, **caractérisé en ce que** la tringle d'activation (22) est dirigée à travers un dispositif de butée (18) qui se trouve entre les montants (11).
